(19) Europäisches Patentamt
European Patent Office
Office européen des brevets

(11) **EP 1 951 806 B1**

(12) **EUROPEAN PATENT SPECIFICATION**

(45) Date of publication and mention of the grant of the patent:
**23.02.2011 Bulletin 2011/08**

(21) Application number: **06847022.8**

(22) Date of filing: **14.11.2006**

(51) Int Cl.:
***C08L 23/10*** *(2006.01)* ***B29C 45/00*** *(2006.01)*
***C08F 10/06*** *(2006.01)* ***C08L 23/08*** *(2006.01)*
***C08L 23/14*** *(2006.01)*

(86) International application number:
**PCT/EP2006/068423**

(87) International publication number:
**WO 2007/060114 (31.05.2007 Gazette 2007/22)**

# (54) IMPACT RESISTANT POLYOLEFIN COMPOSITIONS

SCHLAGZÄHE POLYOLEFINZUSAMMENSETZUNGEN

COMPOSITIONS POLYOLEFINIQUES RESISTANTES AUX CHOCS

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.11.2005 EP 05111084**
**23.11.2005 US 739235 P**

(43) Date of publication of application:
**06.08.2008 Bulletin 2008/32**

(73) Proprietor: **Basell Poliolefine Italia S.r.l.**
**20124 Milano (IT)**

(72) Inventors:
- **MASSARI, Paola**
  **I-44100 Ferrara (IT)**
- **NEWS, Jean**
  **19702 Newark, Delaware (US)**
- **CIARAFONI, Marco**
  **I-44100 Ferrara (IT)**

(74) Representative: **Sacco, Marco**
**Basell Poliolefine Italia S.r.l.**
**Intellectual Property**
**P.le Donegani, 12**
**44100 Ferrara (IT)**

(56) References cited:
**EP-A1- 0 704 463** **EP-A2- 0 077 532**
**WO-A-03/051984** **WO-A-03/076511**
**WO-A-2005/044911** **WO-A-2005/113672**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 951 806 B1

## Description

The present invention relates to polyolefin compositions having good stress whitening resistance and gloss, in combination with a good balance of mechanical properties, to the process for the preparation of said polyolefin compositions and to their use.

It is known in the art that propylene homopolymers are endowed with good stiffness but they have poor impact resistance and elongation values. The improvement in the impact resistance properties, particularly at low temperatures, brought about by the addition of a rubbery component is normally associated with the impairing of the stiffness of the propylene homopolymers.

Several attempts have been made to provide propylene polymer compositions having a good balance of stiffness and impact properties. For example, the Japanese Patent Laid-Open Patent application No.162621/1983 describes an olefin block copolymer made of 20-70 pbw of a highly crystalline propylene polymer, 5 to 30 pbw of a propylene-ethylene random copolymer containing from 8 to less than 30 wt% of ethylene and 10 to 75 pbw of a propylene-ethylene random copolymer having an ethylene content of 30 to 85 pbw. The copolymer composition possesses good impact resistance at low temperatures and very high flexibility.

International publication WO 2005/113672 A1 discloses a polyolefin composition comprising from 50 to 80 wt% of a crystalline propylene polymer, from 5 to 20 wt% of a first elastomenic copolymer of ethylene and from 10 to 40% of a second elastomeric copolymer of ethylene, the intrinsic viscosity [η] of the xylene soluble fraction of said second elastomeric copolymer of ethylene ranging from 1.8 to 4.0 dL/g.

International publication WO 03/051984 shows a polyolefin composition comprising 55-90 wt% of a crystalline propylene and 10-45 wt% of a blend of (a) an ethylene/propylene copolymer having an ethylene content ranging from 15 to 40 % wt; and (b) an ethylene/$C_4$-$C_{20}$ alpha-olefin copolymer, having a content of $C_4$-$C_{20}$ alpha-olefin units ranging from 10 to 40 % wt.

The addition of a rubbery phase to propylene homopolymers normally also adversely affects the optical properties of the homopolymer, resulting in propylene polymer compositions having low gloss. Generally, also the resistance to the stress whitening of said propylene polymer composition is unsatisfactory for the market needs.

Therefore, there is still the need for polyolefin compositions that maintain high stiffness and good impact resistance both at ambient and at low temperatures and that do not show the drawbacks of the polyolefin compositions already known in the art.

Thus, the present invention provides polyolefin composition comprising (percentages based on the sum of component (A) to (C):

(A) from 50 to 80 wt%, preferably from 55 to 70 wt%, more preferably from 60 to 70 wt%, of a propylene polymer having a polydispersity index (P.I.) value ranging from 4.5 to 10 and a content of isotactic pentads, measured by $^{13}C$-NMR on the fraction insoluble in xylene at 25°C, higher than 97.5 mol%, said polymer being selected among propylene homopolymers and copolymers of propylene with at least one linear or branched alpha-olefin having from 2 to 8 carbon atoms other than propylene, said copolymer containing at least 95 wt% (based on the copolymer) of units derived from propylene;

(B) from 5 to 20 wt%, preferably from 10 to 20 wt%, of a first copolymer of ethylene with at least one linear or branched alpha-olefin having 3 to 8 carbon atoms, said first ethylene copolymer containing from 25 to less than 40 wt% (with respect to the component (B)), preferably from 25 to 38 wt%, of units derived from ethylene and having solubility in xylene at 25°C ranging from more than 85 to 95 wt%; and

(C) from 10 to 40 wt%, preferably from 15 to 35 wt%, of a second copolymer of ethylene with at least one linear or branched alpha-olefin having 3 to 8 carbon atoms, said second copolymer containing from 50 up to 75 wt% (with respect to the component (C)), preferably from 55 to 70 wt%, of units derived from ethylene, having solubility in xylene at 25°C ranging from 50 to 85 wt% and an intrinsic viscosity of the fraction soluble in xylene lower than 1.8 dl/g.

Preferably, the polyolefin composition of the invention comprises a total amount of copolymer (B) plus copolymer (C) ranging from 30 to 45 wt%, more preferably from 30 to 40 wt%, with respect to the total composition (sum of (A)+(B)+(C)).

Preferably, the polyolefin composition of the present invention are further characterized by at least one of the properties of the following set:

- total ethylene content of less than 23 wt%; and/or
- the intrinsic viscosity of the total xylene soluble fraction lower than 2.3 dl/g, more preferably ranging from 1.6 to less than 2.3 dl/g; and/or
- Melt Flow Rate (MFR) value of from 2 to 30 g/10 min.

Preferably, the alpha-olefins are selected among ethylene, 1-butene, 1-pentene, 4-methyl-1 pentene, 1-hexone and 1-octene. More preferable, the propylene polymer (A) is a propylene homopolymer and copolymers (B) and (C) are ethylene/propylene copolymers. The copolymers (B) and (C) can optionally contain recurring units deriving from a diene, conjugated or not, such as butadiene, 1,4-hexadiene, 1,5-hexadiene and ethylidene-norbomene-1. The diene, when present, is typically in an amount of ranging from 0.5 to 10 wt% with respect to the weight of the copolymer.

The Polydispersity Index of the propylene polymer (A) preferably ranges from 5 to 8. Typically, the molecular weight distribution of component (A), expressed by the ratio of the weight average molecular weight to the number average molecular weight (Mw/Mn), measured by GPC, is equal to or higher than 9, in particular it ranges from 9.5 to 20. Typically, the value of the ratio of "z-average" molecular weight to number average molecular weight (Mz/Mn) of component (A), measured by GPC, is at least 4.5, preferably at least 5, more preferably it ranges from 5 to 10. The propylene polymer (A) preferably has an MFR value ranging from 10 to 200 g/10 min, more preferably from 50 to 120 g/10min. The xylene-soluble fraction of propylene polymer (A) is normally lower than 5 wt%, preferably lower than 3 wt%.

In the polyolefin composition of the invention the intrinsic viscosity of the xylene-soluble fraction (XSIV) of component (C) is lower than the XSIV of the component (B). Preferably, the XSIV of component (B) ranges from 2.5 to 4.5 dl/g.

Typically, the polyolefin compositions of the present invention are endowed with at least one of the following properties:

- Flexural Modulus of at least 600 MPa, preferably from 600 up to 1400 MPa, more preferably from 700 to 1300 MPa; and/or
- Izod impact resistance at 23°C higher than 11 kJ/$m^2$, preferably ranging from 11 to 60 kJ/$m^2$, more preferably from 25 to 50 kJ/$m^2$; and/or
- Izod impact resistance at -20° C higher than 5 kJ/$m^2$; and/or
- Elongation at break of at least 100%, preferably ranging from 150 to 900%, more preferably from 400 to 800%.

A further object of the present invention is a process for the preparation of the polyolefin compositions of the invention. The polyolefin compositions of the present invention can be prepared by polymerization process comprising at least three polymerization stages, with each subsequent polymerization stage being conducted in the presence of the polymeric material formed in the immediately preceding polymerization reaction, wherein the component (A) is normally prepared in at least one first polymerization stage and the copolymers (B) and (C) are normally prepared in at least two polymerization stages. Preferably, each polymerization stage is carried out in presence of a highly stereospecific heterogeneous Ziegler-Natta catalyst. The Ziegler-Natta catalysts suitable for producing the polyolefin compositions of the invention comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound. Suitable catalysts systems are described in the European patents EP45977, EP361494, EP728769, EP 1272533 and in the international patent application WO00/63261.

According to a preferred embodiment, the solid catalyst component comprises Mg, Ti, halogen and an electron donor selected from succinates of formula (I):

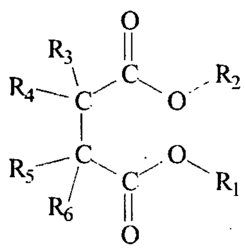

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle.

$R_1$ and $R_2$ are preferably $C_1$-$C_8$ alkyl, cycloalkyl, aryl, arylalkyl and alkylaryl groups. Particularly preferred are the compounds in which $R_1$ and $R_2$ are selected from primary alkyls and in particular branched primary alkyls. Examples

of suitable $R_1$ and $R_2$ groups are methyl, ethyl, n-propyl, n-butyl, isobutyl, neopentyl, 2-ethylhexyl. Particularly preferred are ethyl, isobutyl, and neopentyl.

One of the preferred group of compounds described by the formula (I) is that in which $R_3$ to $R_5$ are hydrogen and $R_6$ is a branched alkyl, cycloalkyl, aryl, arylalkyl and alkylaryl radical having from 3 to 10 carbon atoms. Another preferred group of compounds within those of formula (I) is that in which at least two radicals from $R_3$ to $R_6$ are different from hydrogen and are selected from $C_1$-$C_{20}$ linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is $R_3$ and $R_5$ or $R_4$ and $R_6$ are particularly preferred. According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2$•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130°C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with $TiCl_4$ can be carried out one or more times. The internal donor can be added during the treatment with $TiCl_4$ and the treatment with the electron donor compound can be repeated one or more times. Generally, the succinate of formula (I) is used in molar ratio with respect to the $MgCl_2$ of from 0.01 to 1 preferably from 0.05 to 0.5. The preparation of catalyst components in spherical form is described for example in European patent application EP-A-395083 and in the International patent application WO98/44009 The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000A generally ranges from 0.3 to 1.5 $cm^3/g$, preferably from 0.45 to 1 $cm^3/g$.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

External electron-donor compounds can be of the same type or they can be different from the succinates of formula (I). Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-dithers. Another class of preferred external donor compounds is that of silicon compounds of formula $R_a^5R_b^6Si(OR^7)_c$, where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1,trifluoropropyl-2-ethylpiperidinyl-dimethoxysilane and 1,1,1,trifluoropropyl-metil-dimethoxysilane. The external electron donor compound is used in such an amount to give a molar ratio between the organo-aluminum compound and said electron donor compound of from 0.1 to 500, more preferably from 1 to 300 and in particular from 3 to 100.

The catalysts may be pre-contacted with small quantities of olefin (pre-polymerisation), maintaining the catalyst in suspension in a hydrocarbon solvent, and polymerising at temperatures from 25° to 60°C, thus producing a quantity of polymer from 0.5 to 3 times the weight of the catalyst. The operation can also take place in liquid monomer, producing, in this case, a quantity of polymer ranging from 20 to 1000 times the weight of the catalyst. The polymerization process can be carried out in gas phase and/or in liquid phase, in continuous or batch reactors, such as fluidized bed or slurry reactors. For example, it is possible to carry out the polymerization of the propylene polymer (A) in liquid phase, using liquid propylene as diluent, while the copolymerization stages to obtain the copolymers (B) and (C) can be carried out in gas phase, without intermediate stages except for the partial degassing of the monomers. According to a further embodiment, all the sequential polymerization stages can be carried out in gas phase. In a still further embodiment, the propylene polymer (A) can conveniently be produced by a gas-phase polymerization process carried out in at least two interconnected polymerization zones as described in the European patent EP 782587 and in the International patent application WO00/02929 and the ethylene copolymers (B) and (C) can be produced in conventional gas-phase reactors.

The reaction time, temperature and pressure of the polymerization steps are not critical per se, however the temperature for the preparation of propylene polymer (A) and of ethylene copolymers (B) and (C), that can be the same

or different, is usually from 40°C to 100°C. The polymerization pressure preferably ranges from 33 to 43 bar, if the polymerization is carried out in liquid phase, and from 5 to 30 bar if carried out in gas phase.

The residence time relative to each of the at least three polymerization stages depends on the desired weight ratio between fractions (A), (B) and (C), and can usually range from 15 minutes to 8 hours. The molecular weight can be tailored in each polymerization step by means of conventional molecular weight regulators known in the art (e.g. hydrogen or $ZnEt_2$).

Customary additives, for example nucleating agents, extension oils, fillers, and other organic and inorganic pigments, that are commonly used in olefin polymers, may be added to the polyolefin compositions of the present invention by conventional mixing processes, i.e. during extrusion. The nucleating agents are preferably added to the compositions of the present invention in quantities ranging from 0.01 to 2 wt%, more preferably from 0.1 to 1 wt% with respect to the total weight of the composition.

The polyolefin compositions of the present invention have a good balance of physical mechanical properties, in particular of stiffness and impact properties at low temperatures; in connection with surprisingly high values of elongation at break and reduced shrinkage. Additionally, they show improved stress whitening resistance and good optical properties. The above mentioned peculiar features of the polyolefin compositions of the invention render them particularly suitable for use in injection molding applications, in particular for the production of items for the automotive field.

The following examples are given to illustrate, without limiting, the present invention.

The analytical methods described hereinbelow have been used to determine the properties reported in the description and in the examples.

Comonomer (Ethylene) content: By IR spectroscopy.

Xylene-soluble faction (XS) at 25°C: 2.5 g of polymer and 250 mL of o-xylene are introduced in a glass flask equipped with a refrigerator and a magnetical stirrer. The temperature is raised in 30 minutes up to the boiling point of the solvent. The so obtained solution is then kept under reflux and stirring for further 30 minutes. The closed flask is then kept for 30 minutes in a bath of ice and water and in thermostatic water bath at 25°C for 30 minutes as well. The solid thus obtained is filtered on quick filtering paper and 100 ml of the filtered liquid is poured in a previously weighed aluminium container, which is heated on a heating plate under nitrogen flow, to remove the solvent by evaporation. The container is then kept on an oven at 80°C under vacuum until constant weight is obtained. The residue is weighed to determine the percentage of xylene-soluble polymer.

Intrinsic Viscosity (XSIV): Measured in tetrahydronaphthalene at 135° C.

Molecular weight (Mw, Mn, Mz): Measured by way of gel permeation chromatography (GPC) in 1,2,4-trichlorobenzene.

Determination of isotactic pentads content (mmmm): 50 mg of each xylene insoluble fraction were dissolved in 0.5 mL of $C_2D_2Cl_4$. The $^{13}C$ NMR spectra were acquired on a Bruker DPX-400 (100.61 Mhz, 90° pulse, 12s delay between pulses). About 3000 transients were stored for each spectrum; mmmm pentad peak (21.8 ppm) was used as reference. The microstructure analysis was carried out as described in literature (Polymer, 1984, 25, 1640, by Inoue Y. et Al. and Polymer, 1994, 35, 339, by Chujo R. et Al.).

Polydispersity Index: Determined at a temperature of 200°C by using a parallel plates rheometer model RMS-800 marketed by RHEOMETRICS (USA), operating at an oscillation frequency which increases from 0.1 rad/sec to 100 rad/second. From the modulus separation value, one can derive the P.I. by way of the equation:

$$\text{P.I.} := 54.6 * (\text{modulus separation})^{-1.76}$$

in which the modulus separation is defined as:

$$\text{modulus separation} = \text{frequency at } G'=500\text{Pa} / \text{frequency at } G''=500\text{Pa}$$

wherein G' is storage modulus and G" is the loss modulus.

Melt flow rate: ISO 1133 (230°C, 2.16 kg).

Flexural modulus: ISO 178.

Izod impact resistance: ISO 180/1A.

Tensile stress and Elongation at yield and at break: ISO 527

Stress whitening resistance: the resistance to whitening at ambient temperature (about 23°C) is determined

by subjecting small discs (diameter 38 mm, thickness 1.5 mm) prepared from the polymer to be tested to the impact of a dart dropping from different heights. The dart has diameter of 1.27 mm and a weight of 263 g. The stress-whitening resistance is expressed as the diameter of the whitened area (average value over 10 specimens tested for each dropping height).

Shrinkage: rectangular test specimens having dimension 100x200x2.5 mm are prepared by injection molding using a "Sandretto Serie Sette 190". The main process parameters are reported below:

| | |
|---|---|
| Back pressure: | 10 bar |
| Injection time + holding time: | 30 sec |
| Total cycle time: | 55 sec |
| Mould temperature: | 40°C |
| Melt temperature: | 250°C |

The dimension of the test specimens are measured with a 3D measuring system supplied with a "contact probe" (Microval 3D). The shrinkage is the difference between the initial specimen dimensions after injection and after 48h conditioning at 23°C and it is expressed as percent with respect to the initial specimen dimensions. The longitudinal shrinkage is the shrinkage measured in the direction of the injection flow; the transversal shrinkage is the shrinkage measured across the direction of the injection flow.

Gloss: 10 rectangular specimens (55x60x1 mm) for each polymer to be tested are injection molded using a Battenfeld BA500CD operated under the following conditions:

| | |
|---|---|
| Screw speed: | 120 rpm |
| Back pressure: | 10 bar |
| Mould temperature: | 40°C |
| Melt temperature: | 260°C |
| Injection time: | 3 sec |
| First holding time: | 5 sec |
| Second holding time: | 5 sec |
| Cooling time (after second holding): | 10 sec |

The value of the injection pressure should be sufficient to completely fill the mould in the above mentioned indicated time span. By a glossmeter the fraction of luminous flow reflected by the examined specimens surface is measured, under an incident angle of 60°. The reported value corresponds to the mean gloss value over 10 specimens for each tested polymer.

**Example 1**

Preparation of the solid catalyst component

Into a 500 mL four-necked round flask, purged with nitrogen, 250 ml of $TiCl_4$ are introduced at 0° C. While stirring, 10.0 g of microspheroidal $MgCl_2 \cdot 1.8C_2H_5OH$ (prepared according to the method described in ex.2 of USP 4,399,054 but operating at 3000 rpm instead of 10000 rpm) and 9.1 mmol of diethyl 2,3-(diisopropyl)succinate are added. The temperature is raised to 100°C and maintained for 120 min. Then, the stirring is discontinued, the solid product was allowed to settle and the supernatant liquid is siphoned off. Then the following operations are repeated twice: 250 ml of fresh $TiCl_4$ are added, the mixture is reacted at 120°C for 60 min and the supernatant liquid is siphoned off. The solid is washed six times with anhydrous hexane (6×100 mL) at 60°C.

Preparation of the catalyst system and pre-polymerisation

Before introducing it into the polymerisation reactors, the solid catalyst component described above is contacted at 12° C for 24 minutes with aluminium triethyl ($AlEt_3$) and dicyclopentyldimethoxysilane (DCPMS) in such quantity that the weight ratio of $AlEt_3$ to the solid catalyst component is equal to 11, and the weight ratio $AlEt_3$/DCPMS is equal to 3. The catalyst system is then subjected to pre-polymerisation by maintaining it in suspension in liquid propylene at 20°C for about 5 minutes before introducing it into the first polymerisation reactor.

Polymerization

The polymerisation run is conducted in continuous in a series of three reactors equipped with devices to transfer the product from one reactor to the one immediately next to it. The first reactor is a liquid phase reactor, and the second and third reactors are fluid bed gas phase reactors. Propylene homopolymer (A) is prepared in the first reactor, while ethylene/propylene copolymers (B) and (C) are prepared in the second and third reactor, respectively. Temperature and pressure are maintained constant throughout the course of the reaction. Hydrogen is used as molecular weight regulator. The gas phase (propylene, ethylene and hydrogen) is continuously analysed via gas-chromatography. At the end of the run the powder is discharged and dried under a nitrogen flow.

Then the polymer particles are introduced in an extrusion equipment and mixed with 8500 ppm of talc, 1500 ppm of Irganox B215 (supplied by Ciba-Geigy) and 500 ppm of Ca stearate, to obtain a nucleated composition. The polymer particles are extruded under nitrogen atmosphere in a twin screw extruder, at a rotation speed of 250 rpm and a melt temperature of 200-250° C.

**Comparative example 1 (1c)**

Example 1 is repeated modifying the polymerization conditions to obtain different intrinsic viscosity values of the components (B) and (C).

Polymerisation conditions are indicated on Table 1. Tables 2 collects the data of the single components of the polyolefm compositions and of the final polyolefin composition. The properties of the polyolefin composition of the invention and those of the polyolefin composition of Comparative Example 1 are indicated on Table 3.

Table 1

| Example and comparative example | | 1 | 1c |
|---|---|---|---|
| liquid phase reactor | Polymerisation temperature, °C | 70 | 68 |
| | Pressure, bar | 40 | 39.5 |
| | Residence time, min | 68 | 63 |
| | $H_2$ bulk, mol ppm | 10,000 | 11,000 |
| 1st gas phase reactor | Polymerisation temperature, °C | 80 | 80 |
| | Pressure, bar | 16 | 17 |
| | Residence time, min | 7 | 22.5 |
| | $C_2^-/(C_2^-+C_3^-)$, % | 0,17 | 0.12 |
| | $H_2/C_2^-$, % | 0.075 | 0.019 |
| 2nd gas phase reactor | Polymerisation temperature, °C | 80 | 80 |
| | Pressure, bar | 19 | 20 |
| | Residence time, min | 22.0 | 24.5 |
| | $C_2^-/(C_2^-+C_3^-)$, % | 0.54 | 0.47 |
| | $H_2/C_2^-$, % | 0.2 | 0.052 |
| Notes: $H_2$ bulk = hydrogen concentration in the liquid monomer; $C_2^-$ = ethylene; $C_3^-$ = propylene. | | | |

Table 2

| Example and comparative example | | 1 | 1c |
|---|---|---|---|
| Propylene homopolymer (A) | | | |
| Homopolymer content | wt% | 61.7 | 58.5 |
| MFR | g/10min | 100 | 150 |
| Polydispersity index | | 5.7 | 7 |

(continued)

| Example and comparative example | | 1 | 1c |
|---|---|---|---|
| Mw/Mn ratio | | 10.9 | 10.9 |
| Mz/Mn ratio | | 7.7 | 8.5 |
| Pentad content | mol% | 98 | 97.7 |
| XS | wt% | 2.5 | 3.5 |
| First ethylene copolymer (B) | | | |
| Copolymer content | wt% | 14.5 | 13.5 |
| Ethylene content | wt% | 27 | 28 |
| XSIV | dl/g | 2.91 | 3.8 |
| Second ethylene copolymer (C) | | | |
| Copolymer content | wt% | 23.8 | 28 |
| Ethylene content | wt% | 60 | 61 |
| XSIV | dl/g | 1.62 | 3.16 |
| Final polyolefin composition | | | |
| MFR | g/10min | 16.3 | 7.8 |
| Total ethylene content | wt% | 18.3 | 20.7 |
| (B)+(C) | wt% | 38.3 | 41.5 |
| XS | wt% | 32.1 | 34.7 |
| Ethylene content in XS | wt% | 43 | 44.1 |
| Xylene-insoluble fraction (XI) | wt% | 67.9 | 65.3 |
| Ethylene content in XI | wt% | 8.9 | 11.5 |
| XSIV | dl/g | 2.17 | 3.43 |

Table 3

| Example and Comparative example | | 1 | 1c |
|---|---|---|---|
| Flexural modulus | MPa | 965 | 823 |
| Izod Impact resistance at | | | |
| 23°C | $kJ/m^2$ | 41 | 56 |
| 0°C | $kJ/m^2$ | 31.8 | 56 |
| -20°C | $kJ/m^2$ | 6.3 | 16.2 |
| Tensile strength at yield | MPa | 17.8 | 15.9 |
| Elongation at Yield | % | 8,2 | 7.6 |
| Tensile strength at break | MPa | 16.4 | 15.7 |
| Elongation at break | % | 700 | 423 |
| Shrinkage longitudinal | | 0.96 | 1.32 |
| transversal | | 1.07 | 1.54 |
| Gloss 60° | % | 71 | 40 |
| Stress-whitening: | | | |
| 70 cm | mm | 16 | 22 |

(continued)

| Example and Comparative example | | 1 | 1c |
|---|---|---|---|
| 30 cm | mm | 14 | 14 |
| 20 cm | mm | 12 | 12 |
| 10cm | mm | 11 | 10 |
| 4 cm | mm | 7 | 9 |

## Claims

1. A polyolefin composition comprising whereby the percentages are based on the sum of components (A) to (C):

(A) from 50 to 80 wt% of a propylene polymer having a polydispersity index value measured according to the method disclosed in the description ranging from 4.5 to 10 and a content of isotactic pentads, measured by $^{13}C$-NMR on the fraction insoluble in xylene at 25°C according to the method disclosed in the description, higher than 97.5 mol%, said polymer being selected among propylene homopolymers and copolymers of propylene with at least one linear or branched alpha-olefin having from 2 to 8 carbon atoms other than propylene, said copolymer containing at least 95 wt% (based on the copolymer) of units derived from propylene;
(B) from 5 to 20 wt% of a first copolymer of ethylene with at least one linear or branched alpha-olofin having 3 to 8 carbon atoms, said first ethylene copolymer containing from 25 to less than 40 wt% (with respect to the component (B)) of units derived from ethylene measured by IR spectroscopy and having solubility in xylene at 25°C ranging from more than 85 to 95 wt%; and
(C) from 10 to 40 wt% of a second copolymer of ethylene with at least one linear or branched alpha-olefin having 3 to 8 carbon atoms, said second copolymer containing from 50 up to 75 wt% (with respect to the component (C)) of units derived from ethylene measured by IR spectroscopy, having solubility in xylene at 25°C ranging from 50 to 85 wt% and an intrinsic viscosity of the fraction soluble in xylene, measured in tetrahydronaphthalene at 135° C lower than 1.8 dl/g.

2. The polyolefin composition of claim 1, wherein intrinsic viscosity of the xylene-soluble fraction of component (B), measured in tetrahydronaphthalene at 135° C, ranges from 2.5 to 4.5 dl/g.

3. The polyolefin composition of claim 1 or 2, wherein the propylene polymer (A) is a propylene homopolymer and the ethylene copolymers (B) and (C) are ethylene/propylene copolymers.

4. The polyolefin composition of claim 1 which is **characterized by** at least one of the properties of the following set:

- total ethylene content, measured by IR spectroscopy, of less than 23 wt%;
- intrinsic viscosity of the total xylene soluble fraction, measured in tetrahydronaphthalene at 135° C, lower than 2.3 dl/g,
- Melt Flow Rate (MFR) value, measured according to ISO 1133 (230°C, 2.16 kg), of from 2 to 30 g/10 min.

5. The polyolefin composition of claim 1 which is **characterized by** the fact that the propylene polymer (A) has a MFR value, measured according to ISO 1133 (230°C, 2.16 kg), ranging from 10 to 200 g/10 min

6. A polymerization process for the preparation of the polyolefin composition of claim 1, comprising at least three polymerization stages, with each subsequent polymerization stage being conducted in the presence of the polymeric material formed in the immediately preceding polymerization reaction, wherein the component (A) is prepared in at least one first polymerization stage and the copolymers (B) and (C) are prepared in at least two polymerization stages, and wherein each polymerization stage is carried out in presence of a catalysts system comprising a solid catalyst component comprising at least one titanium compound having at least one titanium-halogen bond and at least an electron-donor compound selected from succinates of formula (I):

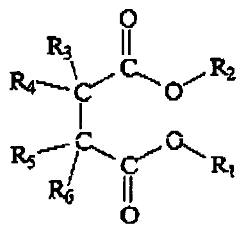

(I)

wherein the radicals $R_1$ and $R_2$, equal to or different from each other, are a $C_1$-$C_{20}$ linear or branched alkyl, alkenyl, cycloalkyl, aryl, arylalkyl or alkylaryl group, optionally containing heteroatoms; the radicals $R_3$ to $R_6$ equal to or different from each other, are hydrogen or a $C_1$-$C_{20}$ linear or branched alkyl, alkenyl, cycloalkyl, aryl, arylalkyl or alkylaryl group, optionally containing heteroatoms, and the radicals $R_3$ to $R_6$ which are joined to the same carbon atom can be linked together to form a cycle, said at least one titanium compound and said electron-donor compound selected from succinates being both supported on magnesium chloride, the catalyst system further comprising an organo-aluminum compound and optionally an external electron-donor compound.

**7.** Use of the polyolefin composition according to anyone of claims 1 to 5 in injection molding applications.

**8.** An article comprising the polyolefin composition according to anyone of claims 1 to 5.

**Patentansprüche**

**1.** Polyolefinzusammensetzung, die aus Folgendem besteht, wobei die Prozente auf die Summe der Komponenten (A) bis (C) bezogen sind:

(A) von 50 bis 80 Gew.-% eines Propylenpolymers mit einem Polydispersitätsindexwert, gemessen nach dem in der Beschreibung offenbarten Verfahren, im Bereich von 4,5 bis 10 und einem Gehalt an isotaktischen Pentaden, gemessen mittels der $^{13}C$-NMR an der in Xylen bei 25 °C unlöslichen Fraktion nach dem in der Beschreibung offenbarten Verfahren, von mehr als 97,5 Mol-%, wobei das Polymer unter Propylenhomopolymeren und Propylencopolymeren mit mindestens einem linearen oder verzweigten $\alpha$-Olefin mit von 2 bis 8 Kohlenstoffatomen mit Ausnahme von Propylen ausgewählt ist, wobei das Copolymer mindestens 95 Gew.-% (bezogen auf das Copolymer) sich von Propylen ableitende Einheiten enthält;
(B) von 5 bis 20 Gew.-% eines ersten Ethylencopolymers mit mindestens einem linearen oder verzweigten $\alpha$-Olefin mit 3 bis 8 Kohlenstoffatomen, wobei das erste Ethylencopolymer von 25 bis weniger als 40 Gew.-% (bezogen auf die Komponente (B)) sich von Ethylen ableitende Einheiten, gemessen mittels der IR-Spektrometrie, enthält und eine Löslichkeit in Xylen bei 25 °C im Bereich von mehr als 85 bis 95 Gew.-% hat; und
(C) von 10 bis 40 Gew.-% eines zweiten Ethylencopolymers mit mindestens einem linearen oder verzweigten $\alpha$-Olefin mit 3 bis 8 Kohlenstoffatomen, wobei das zweite Copolymer von 50 bis zu 75 Gew.-% (bezogen auf die Komponente (C)) sich von Ethylen ableitende Einheiten, gemessen mittels der IR-Spektroskopie, enthält, mit einer Löslichkeit in Xylen bei 25 °C im Bereich von 50 bis 85 Gew.-% und einer intrinsischen Viskosität der in Xylen löslichen Fraktion, gemessen in Tetrahydronaphthalen bei 135 °C, von weniger als 1,8 dl/g.

**2.** Polyolefinzusammensetzung nach Anspruch 1, worin die intrinsische Viskosität der Xylen-löslichen Fraktion von Komponente (B), gemessen in Tetrahydronaphthalen bei 135 °C, im Bereich von 2,5 bis 4,5 dl/g liegt.

**3.** Polyolefinzusammensetzung nach Anspruch 1 oder 2, worin das Propylenpolymer (A) ein Propylenhomopolymer ist und die Ethylencopolymere (B) und (C) Ethylen/Propylen-Copolymere sind.

**4.** Polyolefinzusammensetzung nach Anspruch 1, die durch mindestens eine der Eigenschaften der folgenden Reihe **gekennzeichnet** ist:

- einen Gesamtethylengehalt, gemessen mittels der IR-Spektroskopie, von weniger als 23 Gew.-%;
- eine intrinsische Viskosität der in Xylen löslichen Gesamtfraktion, gemessen in Tetrahydronaphthalen bei 135 °C, von weniger als 2,3 dl/g,
- einen Schmelzflussratenwert (MFR-Wert), gemessen nach ISO 1133 (230 °C, 2,16 kg), von 2 bis 30 g/10 min.

**5.** Polyolefinzuammensetzung nach Anspruch 1, **dadurch gekennzeichnet, dass** das Propylenpolymer (A) einen MFR-Wert, gemessen nach ISO 1133 (230 °C, 2,16 kg), im Bereich von 10 bis 200 g/10 min hat.

**6.** Polymerisationsverfahren zur Herstellung der Polyolefinzusammensetzung nach Anspruch 1, umfassend mindestens drei Polymerisationsstufen, wobei jede sich anschließende Polymerisationsstufe in Gegenwart des in der unmittelbar vorangehenden Polymerisationsreaktion gebildeten Polymermaterials durchgeführt wird, worin die Komponente (A) in mindestens einer ersten Polymerisationsstufe hergestellt wird und die Copolymere (B) und (C) in mindestens zwei Polymerisationsstufen hergestellt werden, und worin jede Polymerisationsstufe in Gegenwart eines Katalysatorsystems durchgeführt wird, das aus einer festen Katalysatorkomponente, umfassend mindestens eine Titanverbindung mit mindestens einer Titan-Halogen-Bindung, und mindestens einer aus Succinaten der Formel (I) ausgewählten Elektronendonator-Verbindung besteht:

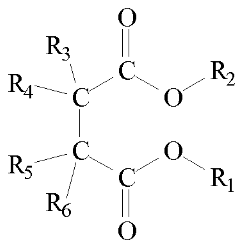

(I)

worin die Reste $R_1$ und $R_2$, gleich oder verschieden voneinander, eine lineare oder verzweigte $C_1$- bis $C_{20}$-Alkyl-, -Alkenyl-, -Cycloalkyl-, -Aryl-, Arylalkyl- oder -Alkylarylgruppe, gegebenenfalls mit Heteroatomen sind, die Reste $R_3$ bis $R_6$, gleich oder verschieden voneinander, Wasserstoff oder eine lineare oder verzweigte $C_1$- bis $C_{20}$-Alkyl-, -Alkenyl-, -Cycloalkyl-, -Aryl, -Arylalkyl- oder -Alkylarylgruppe, gegebenenfalls mit Heteroatomen sind, und die mit dem gleichen Kohlenstoff verbundenen Reste $R_3$ bis $R_6$ zur Bildung eines Zyklus miteinander verknüpft werden können, wobei mindestens eine Titanverbindung und die aus Succinaten ausgewählte Elektronendonator-Verbindung beide auf Magnesiumchlorid geträgert sind, wobei das Katalysatorsystem ferner aus einer Organoaluminiumverbindung und gegebenenfalls einer externen Elektronendonator-Verbindung besteht.

**7.** Verwendung der Polyolefinzusammensetzung nach einem der Ansprüche 1 bis 5 in Spritzgießapplikationen.

**8.** Gegenstand, umfassend die Polyolefinzusammensetzung nach einem der Ansprüche 1 bis 5.

**Revendications**

**1.** Composition polyoléfinique comprenant, les pourcentages étant basés sur la somme des composants (A) à (C), :

(A) 50 à 80% en poids d'un polymère de propylène présentant une valeur de l'indice de polydispersité mesurée selon la méthode divulguée dans la description dans la plage de 4,5 à 10 et une teneur en pentades isotactiques, mesurée par $^{13}$C-RMN sur la fraction insoluble dans le xylène à 25°C selon la méthode divulguée dans la description, supérieure à 97,5% en mole, ledit polymère étant choisi parmi des homopolymères de propylène et des copolymères de propylène avec au moins une alpha-oléfine linéaire ou ramifiée comprenant 2 à 8 atomes de carbone autre que le propylène, ledit copolymère contenant au moins 95% en poids (sur base du copolymère) d'unités dérivées du propylène ;
(B) 5 à 20% en poids d'un premier copolymère d'éthylène avec au moins une alpha-oléfine linéaire ou ramifiée comprenant 3 à 8 atomes de carbone, ledit premier copolymère d'éthylène contenant de 25% à moins de 40% en poids (par rapport au composant (B)) d'unités dérivées d'éthylène, mesurés par spectroscopie IR et présentant une solubilité dans le xylène à 25°C dans la plage de plus de 85 à 95% en poids ; et
(C) 10 à 40% en poids d'un deuxième copolymère d'éthylène avec au moins une alpha-oléfine linéaire ou ramifiée comprenant 3 à 8 atomes de carbone, ledit deuxième copolymère contenant de 50% jusqu'à 75% en poids (par rapport au composant (C)) d'unités dérivées d'éthylène, mesurés par spectroscopie IR, présentant une solubilité dans le xylène à 25°C dans la plage de 50 à 85% en poids et une viscosité intrinsèque de la fraction soluble dans le xylène, mesurée dans du tétrahydronaphtalène à 135°C, inférieure à 1,8 dl/g.

**2.** Composition polyoléfinique selon la revendication 1, dans laquelle la viscosité intrinsèque de la fraction soluble dans le xylène du composant (B), mesurée dans du tétrahydronaphtalène à 135°C, se situe dans la plage de 2,5 à 4,5 dl/g.

**3.** Composition polyoléfinique selon la revendication 1 ou 2, dans laquelle le polymère de propylène (A) est un homopolymère de propylène et les copolymères d'éthylène (B) et (C) sont des copolymères d'éthylène/propylène.

**4.** Composition polyoléfinique selon la revendication 1, qui est **caractérisée par** au moins une des propriétés de la série suivante :

- teneur totale en éthylène, mesurée par spectroscopie IR, inférieure à 23% en poids ;
- viscosité intrinsèque de la fraction totale soluble dans le xylène, mesurée dans du tétrahydronaphtalène à 135°C, inférieure à 2,3 dl/g,
- valeur de l'indice de fluidité à chaud (MFR), mesurée selon la norme ISO 1133 (230°C/2,16 kg), de 2 à 30 g/10 min.

**5.** Composition polyoléfinique selon la revendication 1, qui est **caractérisée par le fait que** le polymère de propylène (A) présente une valeur MFR, mesurée selon la norme ISO 1133 (230°C/2,16 kg), dans la plage de 10 à 200 g/10 min.

**6.** Procédé de polymérisation pour la préparation de la composition polyoléfinique selon la revendication 1, comprenant au moins trois étapes de polymérisation, chaque étape consécutive de polymérisation étant réalisée en présence de matériau polymère formé dans la réaction de polymérisation immédiatement précédente, dans lequel le composant (A) est préparé dans au moins une première étape de polymérisation et les copolymères (B) et (C) sont préparés dans au moins deux étapes de polymérisation et dans lequel chaque étape de polymérisation est réalisée en présence d'un système de catalyseur comprenant un composant catalyseur solide comprenant au moins un composé de titane présentant au moins une liaison titane-halogène et au moins un composé donneur d'électrons choisi parmi les succinates de formule (I) :

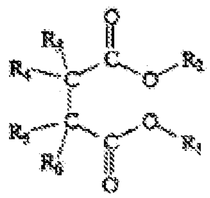

(I)

dans laquelle les radicaux $R_1$ et $R_2$, identiques ou différents l'un de l'autre, représentent un groupe alkyle, alcényle, linéaire ou ramifié, cycloalkyle, aryle, arylalkyle ou alkylaryle en $C_1$-$C_{20}$, contenant éventuellement des hétéroatomes ; les radicaux $R_3$ à $R_6$, identiques ou différents les uns des autres, représentent hydrogène ou un groupe alkyle, alcényle, linéaire ou ramifié, cycloalkyle, aryle, arylalkyle ou alkylaryle en $C_1$-$C_{20}$, contenant éventuellement des hétéroatomes, et les radicaux $R_3$ à $R_6$ qui sont liés au même atome de carbone peuvent être liés ensemble pour former un cycle, ledit au moins un composé de titane et ledit composé donneur d'électrons choisi parmi les succinates étant tous deux supportés sur du chlorure de magnésium, le système de catalyseur comprenant en outre un composé organique de l'aluminium et éventuellement un composé donneur d'électrons externe.

**7.** Utilisation de la composition polyoléfinique selon l'une quelconque des revendications 1 à 5 dans des applications de moulage par injection.

**8.** Objet comprenant la composition polyoléfinique selon l'une quelconque des revendications 1 à 5.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 58162621 A
- WO 2005113672 A1
- WO 03051984 A
- EP 45977 A
- EP 361494 A
- EP 728769 A
- EP 1272533 A
- WO 0063261 A
- US 4399054 A
- US 4469648 A
- EP 395083 A
- WO 9844009 A
- EP 782587 A
- WO 0002929 A
- US P4399054 A


### Non-patent literature cited in the description


- **Inoue Y.** *Polymer,* 1984, vol. 25, 1640
- **Chujo R.** 35. *Polymer,* 1994, 339